# EUROPEAN PATENT APPLICATION

(11) **EP 3 561 444 A1**
(43) Date of publication of application: **30.10.2019**
(21) Application number: 18169321.9
(22) Date of filing: 25.04.2018
(51) Int. Cl.: G01B 11/16, G01L 1/24

(54) **STRAIN SENSOR AND METHOD FOR DETECTING STRAIN**

(71) Applicant: Chalmers Ventures AB, 412 96 Göteborg (SE)
(72) Inventor: BERGHÄUSER, Gunnar, 10963 BERLIN (DE); FEIERABEND, Maja, 412 96 GÖTEBORG (SE); MALIC, Ermin, 412 96 GÖTEBORG (SE)
(74) Representative: AWA Sweden AB

(57) **Abstract**

A strain sensor (1) is disclosed. The strain sensor (1) comprises: a two-dimensional layer of material (4); a light source (6) arranged to apply light to the layer of material (4); a detector (7) configured to detect an optical spectrum of the layer of material (4); and processing circuitry (8) configured to determine a difference between a characteristic of the detected optical spectrum and a corresponding characteristic of a reference optical spectrum. The layer of material (4) has been subjected to a pre-treatment to provide a momentum allowing optically inaccessible excitonic states to be accessed, and the difference is indicative of a strain to which the layer of material (4) is subjected. The strain sensor can have a high strain sensitivity. A method for detecting strain is also disclosed.

## Description

### TECHNICAL FIELD

The present invention relates to a strain sensor and a method for detecting strain.

### BACKGROUND OF THE INVENTION

Strain detection has widespread relevance in many different fields, ranging from commercial applications to applied and basic research. A commonly used technique is to determine strain based on a change in electrical resistance. Foil gauges, for example, are based on this technique and have a metallic foil pattern, the electrical resistance of which changes when stretched or compressed. Another example are piezoresistors, which are suitable for measuring small strains, but also typically more fragile and sensitive to temperature changes than foil gauges.

While foil gauges and piezoresistors, and other similar strain sensors, are suitable for their intended use, there is a perceived need for continued innovation efforts focusing on developing strain sensors with higher strain sensitivity. There is also a need for strain sensors that are thin, enery efficient and/or cost effective to manufacture.

### SUMMARY OF THE INVENTION

It is an object of the present invention to provide an alternative and improved strain sensor and method for detecting strain.

According to a first aspect of the present invention, there is presented a strain sensor comprising: a two-dimensional layer of material having an electronic band structure comprising a valence band, a first conduction band separated from the valence band by a first energy gap, such that the layer of material exhibits optically accessible excitonic states, and a second conduction band separated from the valence band by a second energy gap and a momentum gap, such that the layer of material exhibits optically inaccessible excitonic states; a light source arranged to apply light to the layer of material; a detector configured to detect an optical spectrum of the layer of material resulting from light applied by the light source to the layer of material; and processing circuitry configured to determine a difference between a characteristic of the detected optical spectrum and a corresponding characteristic of a reference optical spectrum, wherein the layer of material has been subjected to a pre-treatment to provide a momentum allowing the optically inaccessible states to be accessed, wherein the difference is indicative of a strain to which the layer of material is subjected, wherein the reference spectrum comprises a reference peak ascribable to the optically inaccessible excitonic states, and wherein the corresponding characteristic is a characteristic of the reference peak.

According to a second aspect of the present invention, there is presented a method for detecting strain, the method comprising: providing a two-dimensional layer of material having an electronic band structure comprising a valence band, a first conduction band separated from the valence band by a first energy gap, such that the layer of material exhibits optically accessible excitonic states, and a second conduction band separated from the valence band by a second energy gap and a momentum gap, such that the layer of material exhibits optically inaccessible excitonic states; subjecting the layer of material to strain; applying light to the layer of material; detecting an optical spectrum of the layer of material resulting from the light applied to the layer of material; and determining a difference between a characteristic of the detected optical spectrum and a corresponding characteristic of a reference optical spectrum, wherein the layer of material has been pre-treated to provide a momentum allowing the optically inaccessible states to be accessed, wherein the difference is indicative of a strain applied to the layer of material, wherein the reference spectrum comprises a reference peak ascribable to the optically inaccessible excitonic states, and wherein the corresponding characteristic is a characteristic of the reference peak.

By "two-dimensional" is herein meant that the layer of material has a surface area to volume ratio such that the surface properties dominate significantly over the volume properties. The layer of material typically has a thickness of one atomic layer or a few atomic layers.

By "optical spectrum" is herein meant an optical response of a material to light. Such an optical spectrum can be obtained in various ways, for example by a photoluminescence measurement, a reflectance measurement, a transmittance measurement or an absorption measurement.

By an excitonic state being "optically accessible" is meant that the excitonic state can be excited through optical excitation alone. By an excitonic state being "optically inaccessible" is meant that the excitonic state cannot be excited through optical excitation alone. Rather, excitation of an optically inaccessible excitonic state requires a transfer of momentum in addition to optical excitation.

By "momentum" is herein meant electronic center-of-mass momentum, unless otherwise stated.

The inventors of the present invention have previously demonstrated that, in some materials, optically inaccessible, or "dark" or momentum-forbidden, excitonic states can be accessed, or "activated", through interaction with molecular dipole moments that provide the required momentum to reach these states. Such activated dark excitonic states result in an additional peak in the optical spectrum of the material. A discussion of this phenomenon, and its relevance to chemical sensing, can be found in the article "Proposal for dark exciton based chemical sensors" (M. Feierabend et al., Nat. Commun. 8, 14776 doi: 10.1038/ncomms14776, 2017).

The present invention is based on the surprising realization, reached by the inventors through computer simulations, that the dark exciton peak is remarkably sensitive to the application of strain, and in particular much more so than the bright exciton peak. The inventors have found that one typically sees a clear effect on the dark exciton peak for strains that are significantly smaller, often by an order of magnitude, than those strains for which one sees a clear effect on the bright exciton peak. Thus, significant changes in the optical response of the dark exciton peak appear already at very small values of strain, and the inventors have used this insight to develop a technique for strain detection that enables strains, including very small strains, to be detected and/or measured with high accuracy over a wide temperature range. In addition, the strain sensor developed by the inventors can be extremely thin as well as energy efficient. The strain sensor can also be manufactured in a cost effective manner.

It is noted that that the inventors of the present invention have further surprisingly found that the dark exciton states may, at least in some materials, be "deactivated" for some values of strain. Hence, the present invention may advantageously be used not only to measure strain, but also in on/off type of sensing, such as contact sensing and touch sensing.

The corresponding characteristic may be based on one of: an amplitude of the reference peak; a width of the reference peak; and a position of the reference peak. The reference optical spectrum may be parametrized and the corresponding characteristic may be a scalar quantity. Thereby, the difference between the characteristic and the corresponding characteristic can be determined in a fast and easy manner.

The reference optical spectrum may include a further reference peak ascribable to the optically accessible excitonic states, and the corresponding characteristic may be based on a relationship between the reference peak and the further reference peak. For example, the corresponding characteristic may be based on one of: a relationship between an amplitude of the reference peak and an amplitude of the further reference peak; a relationship between a width of the reference peak and a width of the further reference peak; and a relationship between a position of the reference peak and a position of the further reference peak. A "relationship" may for example be a ratio or a difference.

The processing circuitry may be configured to determine a value of the strain to which the layer of material is subjected, the value being based on the determined difference. Thus, with this design, the applied strain can be measured by the strain sensor.

The processing circuitry may be configured to relate the determined difference to a predetermined value representing an effect of strain on the layer of material. The predetermined value may for example be obtained from a calibration of the strain sensor.

The processing circuitry may be configured to determine at least one further difference, the further difference being a difference between a further characteristic of the detected optical spectrum and a further corresponding characteristic of the reference optical spectrum.

The purpose of the pre-treatment to which the layer of material has been subjected is to activate dark excitonic states so as to make them visible in optical spectra. It is noted that, in practice, activated dark states might be present to a small degree in realistic two-dimensional materials without any pre-treatment, for example because of phonons or impurities. The term "pre-treatment" is here meant to include treatments for increasing the degree of activated dark states in a material, or amplifying the effect of activated dark states in the material, so that the material is practically usable for strain sensing. Further, it is noted that the pre-treatment may be the growing of the two-dimensional layer of material or be included in the growing of the two-dimensional layer of material.

There are several different mechanisms which can provide the momentum required to reach the dark excitonic states and hence through which the dark excitonic states can be activated.

For example, the dark exciton states can be activated through exciton-molecule scattering. The pre-treatment may comprise adapting the layer of material to increase exciton-molecule scattering. The pre-treatment may comprise applying dipole moments to the layer of material so that the momentum is at least partly provided by the dipole moments. In particular, the pre-treatment may comprise arranging molecules with a dipole moment on the layer of material so that the momentum is at least partly provided by the molecules with a dipole moment. It is noted, however, that the required momentum can be provided by something else than molecules, such as a layer with dipole moments arranged on the layer of material or a gold nano antenna arranged on the layer of material.

As another example, the dark exciton states may be activated through exciton-disorder scattering. Accordingly, the pre-treatment may comprise adapting the layer of material to increase exciton-disorder scattering. Such a pre-treatment may, for example, comprise creating disorder sites in the layer of material. The disorder sites may be formed by spatial inhomogeneities in the layer of material, such as impurities. Also, the disorder sites may be created by doping the layer of material.

As yet another example, the dark exciton states may be activated through exciton-phonon scattering. Accordingly, the pre-treatment may comprise adapting the layer of material to increase exciton-phonon scattering. Such a pre-treatment may, for example, comprise removing impurities from the layer of material. An example of a technique to remove impurities is to encapsulate the layer of material with hexagonal boron nitride.

The layer of material may comprise a transition metal dichalcogenide. The material may for example be a tungsten-based transition metal dichalcogenide, such as tungsten disulfide (WS₂) or tungsten diselenide (WSe₂), or a molybdenum-based transition metal dichalcogenide. Such materials are advantageous for several reasons. For example, it is possible to make very thin layers of transition metal dichalcogenides, and thus to achieve a high surface area to volume ratio. Moreover, due to a direct band gap and a very strong Coulomb interaction between electrons and holes, monolayers of transition metal dichalcogenides exhibit efficient light-matter coupling and stable excitonic states. These properties are particularly pronounced in tungsten-based transition metal dichalcogenides, partly because these materials have dark excitonic states lying energetically below bright excitonic states.

The strain sensor may comprise a substrate, the layer of material being attached to the substrate such that a strain applied to the substrate is at least partly transmitted to the layer of material. By varying, for example, the substrate thickness and/or the substrate material, it may be possible to affect the strain sensors sensitivity to strain and the strain range within which the strain sensor should operate.

It is noted that the present invention relates to all possible combination of features recited in the claims.

### BRIEF DESCRIPTION OF THE DRAWINGS

The present invention will be described in more detail with reference to the appended drawings which show examples of embodiments of the present invention.
Figure 1 is a schematic perspective view of a strain sensor according to an embodiment of the present invention.
Figure 2 shows schematically electronic dispersion relations. The label *E* on the vertical axis represents electronic energy, and the label *k* on the horizontal axis represents electronic center-of-mass momentum.
Figure 3 shows schematically excitonic dispersion relations. The label *E* on the vertical axis represents excitonic energy, and the label Q on the horizontal axis represents excitonic center-of-mass momentum.
Figure 4 shows schematically optical spectra. The label *I* on the vertical axis represents intensity, and the label *E* on the horizontal axis represents energy.
Figure 5 shows a flowchart of a method for detecting strain according to an embodiment of the present invention.
Figure 6 shows schematically optical spectra. The label *I* on the vertical axis represents intensity, and the label E on the horizontal axis represents energy.
Figure 7 is a schematic perspective view of a strain sensor according to an embodiment of the present invention.

The Figures are not drawn to scale. The sizes of layers and regions are exaggerated for illustrative purposes and, thus, are provided to illustrate the general structures of embodiments of the present invention. Like reference numerals refer to like elements throughout.

### DETAILED DESCRIPTION OF EMBODIMENTS OF THE INVENTION

The present invention will now be described more fully hereinafter with reference to the accompanying drawings showing embodiments of the invention. The present invention may, however, be embodied in many different forms and should not be construed as limited to the embodiments set forth herein. Rather, these embodiments are provided for thoroughness and completeness, and fully convey the scope of the invention to a person skilled in the art.

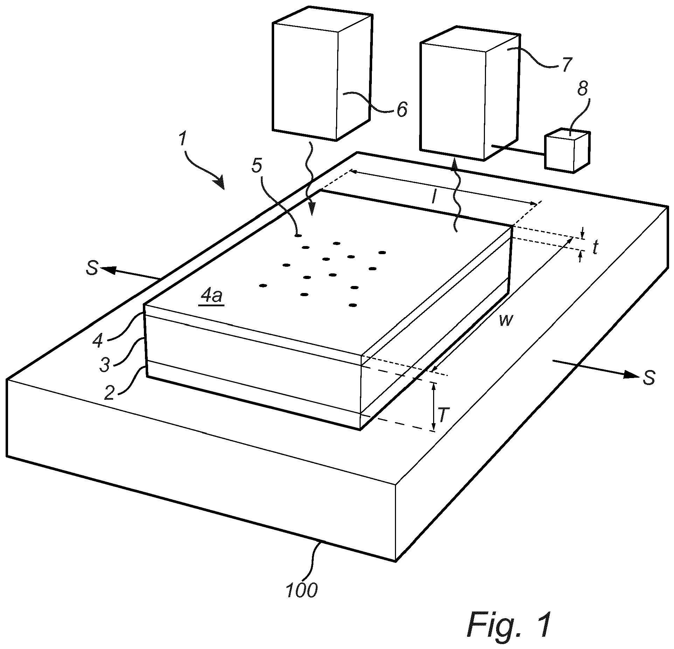

Figure 1 shows an example of a strain sensor 1, henceforth referred to as the "sensor" for brevity, arranged to detect strain applied to an object 100. The object 100 illustrated in Figure 1 is a piece of rigid material, such as a metal or a rigid plastic material. It is noted, however, that the sensor 1 may be used for detecting strain applied to flexible materials, examples thereof including textiles, flexible plastics, and human tissue, such as skin and muscular tissue.

The sensor 1 is in this case attached to the object 100 by an attachment means 2, here a chemical attachment means. More precisely, the attachment means 2 is in this case an adhesive layer, such as a layer of glue. The adhesive layer 2 is here arranged on a substrate 3. Specifically, the adhesive layer 2 is here sandwiched between the substrate 3 and the object 100. In Figure 1, the adhesive layer 2 is arranged on a bottom surface of the substrate 3. The substrate 3 is in this case made of a material such that the substrate 3 can be stretched and compressed to some extent without breaking. The substrate 3 may for example be made of silicon dioxide. Examples of other suitable substrate materials include fused silica and flexible plastic materials, such as polycarbonate. The thickness T of the substrate 3 depends on the application, ranging from millimeters down to micrometers, and even nanometers.

The sensor 1 further comprises a layer of material 4, here supported by the substrate 3. The layer of material 4 will henceforth be referred to as the "layer" for brevity. The material of the layer 4 may be chosen to suit the intended application of the sensor 1. The layer 4 may for example be a layer of a transition metal dichalcogenide. Further, the layer 4 is in this case a monolayer, i.e. the thickness t of the layer 4 is that of a single atomic layer. The layer 4 may be referred to as two-dimensional. As illustrated in Figure 1, the layer 4 here has a rectangular shape, the width, length and thickness of the layer 4 being labeled by w, I and t, respectively. Hence, the surface area to volume ratio is in this case given by the expression (l×w)/(l×w×t) = 1/t.

It is noted that, although the layer 4 illustrated in Figure 1 covers the entire top surface of the substrate 3, the layer 4 may cover only a part of that surface in a different example. It is also noted that the shape of the layer 4 may, in a different example, be circular, irregular or in some other way different from the rectangular shape shown in Figure 1. Further, the thickness t may in a different example be greater than a single atomic layer. The layer 4 may for example be formed by six atomic layers or less. For instance, the layer 4 may be formed by three atomic layers, such as one layer of tungsten atoms sandwiched between two layers of sulfur atoms in the case where the layer 4 is made of tungsten disulfide..

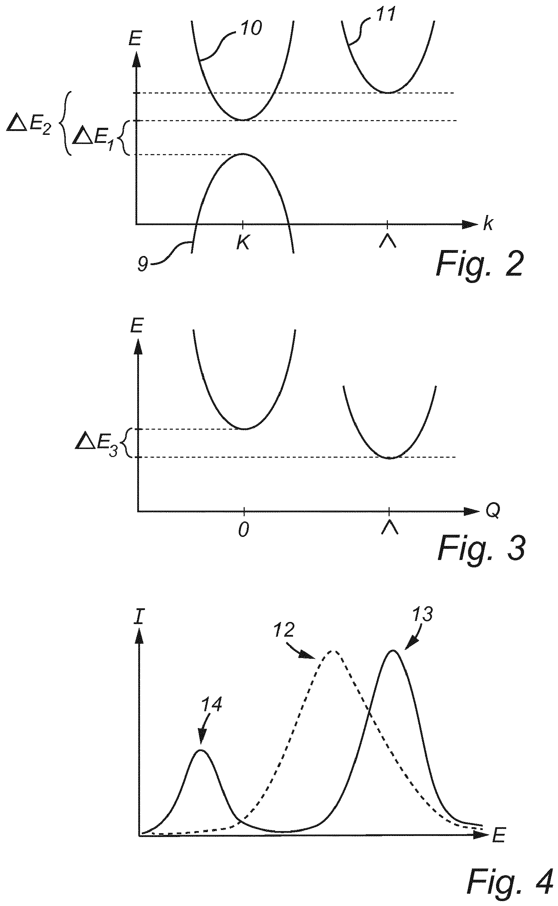

The layer 4 has been subjected to a pre-treatment. In this case, the layer 4 has been subjected to a pre-treatment in which dipole moments, here in the form of molecules 5 with a dipole moment, were applied to the layer 4. As will be further discussed below with respect to Figures 2 to 4, the applied dipole moments influence the excitonic properties of the layer 4. The molecules 5 are here attached to a surface 4a of the layer 4. In Figure 1, the surface 4a is the top surface of the layer 4.

The molecules 5 may for example be merocyanine molecules which are attached to the layer 4 by non-covalent bonding. The suitable choice of molecules 5 depends on, for example, the material of the layer 4. In general, the molecules 5 should preferably be high-dipole molecules, such as molecules having a dipole moment of at least 10 Debye. Further examples of molecules 5 that may be used include water molecules, hydrophobic molecules and hydrophile molecules. Also, the molecules 5 may be attached to the layer 4 in some other way than by non-covalent bonds, such as by covalent bonds. It is noted that the surface 4a may be "functionalized" in some way so that a specific type of molecule will attached thereto. It is also noted that even though all of the molecules 5 are of the same type in this example, there may be molecules 5 of different types attached to the layer 4 in a different example.

The sensor 1 further comprises a light source 6 arranged to shine light onto the layer 4. More precisely, the light source 6 is here arranged to shine light onto the surface 4a of the layer 4. The light source 6 may for example be a solid state light source, such as a light emitting diode. Further, the light source 6 may be a laser diode or some other type of laser.

The sensor 1 also comprises a detector 7 and processing circuitry 8. The detector 7 is arranged to receive light emanating from the layer 4. Specifically, the detector 7 is here arranged to receive light emanating from the surface 4a. The detector 7 may for example be an optical sensor, such as an electro-optical sensor. The processing circuitry 8 is here electrically connected to the detector 7.

Although the light source 6, the detector 7 and the processing circuitry 8 are illustrated in Figure 1 as separate units, all or some of these components may be integrated with each other in a different example. For instance, the processing circuitry 8 may be integrated with the detector 7. Further, the detector 7 and the processing circuitry 8 may in a different example be configured to communicate wirelessly with each other. Still further, the processing circuitry 8 may in a different example form part of a computer, such as a laptop or desktop computer.

It is noted that the sensor 1 usually includes some additional components that are not illustrated in Figure 1, such as a housing, various types of electronic circuitry, input and output connections, etc.

Turning now to Figure 2, showing electronic dispersion relations of the layer 4, it can be seen that the band structure of the layer 4 includes a valence band 9 and a first conduction band 10. The first conduction band 10 is separated from the valence band 9 by a first energy gap ΔE₁. The first energy gap ΔE₁ is a direct band gap, i.e. there is a difference in energy, but not in momentum, between the highest-energy state of the valence band 9 and the lowest-energy state of the first conduction band 10. The highest-energy state of the valence band 9 and the lowest-energy state of the first conduction band 10 are both located at the K point of the Brillouin zone. As an example, it may be noted that the first energy gap ΔE₁ of a tungsten disulfide layer is approximately 2.8 eV. The band structure of the layer 4 also includes a second conduction band 11 which is separated from the valence band 7 by a second energy gap ΔE₂. The second energy gap ΔE₂ is an indirect band gap, i.e. there is a difference in both energy and momentum between the highest-energy state of the valence band 9 and the lowest-energy state of the second conduction band 11. The lowest-energy state of the second conduction band 11 is located at the Λ point of the Brillouin zone. In this case, the second energy gap ΔE₂ is larger than the first energy gap ΔE₁, because the layer 4 is a direct semiconductor having a direct and lower-lying indirect band gap. As an example, it may be noted that the second energy gap ΔE₂ of a tungsten disulfide layer is approximately 30 meV larger than the first energy gap ΔE₁.

The valence band 9 and the first conduction 10 band together define a K valley. By "valley" is here meant an energy region around a band minimum. The layer 4 exhibits optically accessible excitonic states "located" in the K valley. Accordingly, through optical excitation, an electron in the valence band 9 can move to the first conduction band 10, leaving a hole, or vacancy, in the valence band 9. Both the hole and the excited electron are located in the K valley. The electron and hole are bound through Coulomb interaction and form a type of quasi-particle which is conventionally referred to as an exciton. The excitonic state formed as a result of optical excitation will henceforth be referred to as a bright exciton, reflecting that it can be created through optical excitation alone, without any transfer of momentum. The center-of-mass momentum of a bright exciton is zero, or close to zero.

The second conduction band 11 defines a A valley. The layer 4 exhibits optically inaccessible excitonic states located in the A valley. These states are inaccessible by optical excitation alone because the photon momentum is not sufficient to reach them. An optically inaccessible excitonic state, which is formed as a result of optical excitation and a transfer of momentum, will henceforth be referred to as a dark exciton. The dark excitons exhibit a non-vanishing center-of-mass momentum. The dark excitons are such that the excited electron and the hole are located in the A valley and at the K valley, respectively. For example, in tungsten disulfide, and also in tungsten diselenide, the dark excitons associated with the A valley are lower in energy than the bright excitons associated with the K valley, as is illustrated in Figure 3 showing excitonic dispersion relations of the layer 4. As an example, it may be noted that the difference ΔE₃ of a tungsten disulfide layer is approximately 60 meV.

In order for an electron in the valence band 9 to move to the second conduction band 11, so that a dark exciton is created, a combination of optical excitation and momentum transfer is required. The momentum transfer can occur through the interaction between the electron and a static electric dipole field induced by a molecule 5 attached to the surface 4a. The strength of the interaction depends on factors such as the direction and strength of the dipole moment of the molecule 5 and the distance between the surface 4a and the molecule 5. The strength of the interaction depends also on the concentration of molecules 5 attached to the surface 4a.

In Figure 4, the solid line shows an optical spectrum of the layer 4 with the molecules 5 attached thereto, and the dashed line shows a corresponding optical spectrum of the layer 4 without the molecules 5 attached thereto. The optical spectra illustrated in Figure 4 are obtained by photoluminescence measurements. However, other measurement techniques may be used to obtain similar optical spectra reflecting the excitonic structure.

As can be seen in Figure 4, if there are no molecules with a dipole moment attached to the layer 4, the optical spectrum has a major peak 12 which can be ascribed to bright excitons. This major peak 12 is centered approximately at the excitation energy of the bright excitons. If, on the other hand, there are molecules with a dipole moment attached to the layer 4, the optical absorption spectrum has a major peak 13 and a minor peak 14. The major peak 13 is centered approximately at the bright exciton excitation energy and can be ascribed to bright excitons. The minor peak 14 is centered approximately at the dark exciton excitation energy and can be ascribed to dark excitons. The exact positions of the major peak 13 and the minor peak 14 depend for example on the strength of the interaction between the layer 4 and the attached molecules 5. The major peaks 12, 13 are in the example illustrated in Figure 4 centered at different energies, but this is may or may not be the case in a different example.

The dark and bright exciton peaks are in many materials centered at energies somewhere in the range from 1.5 to 2.5 eV. In tungsten disulfide, for example, the dark and bright exciton peaks are centered at energies somewhere in the range from 1.95 to 2.05 eV. It should be noted that, although Figure 4 shows the dark exciton peak 14 at a lower energy than, i.e. to the left of, the bright exciton peak 13, the dark exciton peak 14 can in general be centered at a lower energy or a higher energy than the bright exciton peak 13. Several factors affect the relative positions of the bright and dark exciton peaks 13, 14. Three examples of such factors are the choice of material of the layer 4, the choice of substrate 3, and the concentration of the molecules 5 attached to the layer 4. Increasing the molecular coverage typically shifts the dark exciton peak 14 toward lower energies. Further, it should be noted that, usually, the larger the dipole moment of the molecules 5 attached to the layer 4, the larger the splitting between bright and dark exciton peaks 13, 14 because of an increased exciton-molecule coupling. Still further, both peaks 13, 14 tend to be smoothed out with increased temperature, but it can be shown that the dark exciton peak 14 is clearly observable over a wide range of temperatures.

It should be noted that the above-described way of molecule-induced activation of dark excitons is only one of several mechanisms through which the dark excitons can be activated and made visible in optical spectra. Thus, in a different example, the sensor 1 may be configured such that the dark excitons are activated in a different way than by exciton-molecule scattering. Examples of other such mechanisms, which can provide the momentum that is required to reach the momentum-forbidden dark excitonic states, include exciton-disorder scattering and exciton-phonon scattering. Accordingly, in a different example, the layer 4 may have been subjected to a pre-treatment for increasing the efficiency of exciton-phonon scattering and/or a pre-treatment for increasing the efficiency of exciton-disorder scattering.

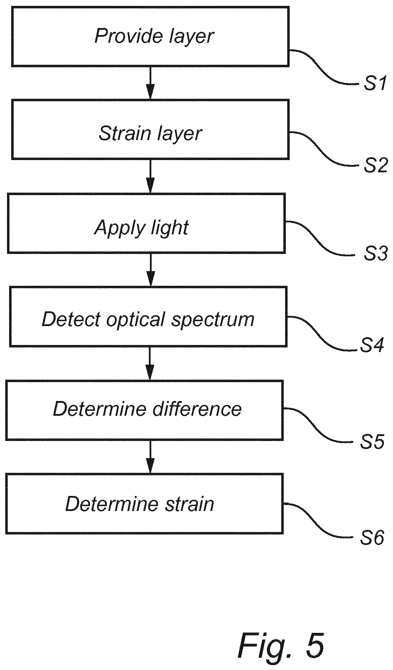

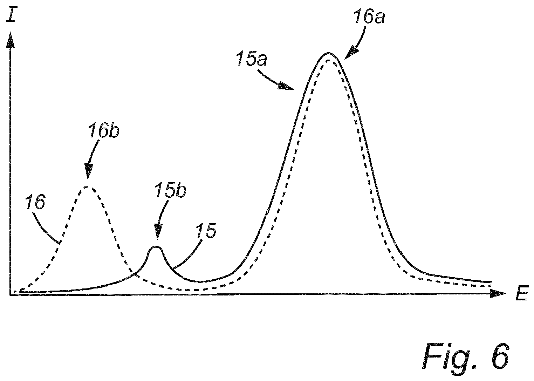

With reference to Figures 5 and 6, and continued reference to Figure 1, an example of a method for detecting strain applied to the object 100, using the sensor 1, will now be described.

At a step S1, the layer 4 is provided. Specifically, in this case, the sensor 1, including the layer 4, is provided and attached to the object 100.

At step S2, the layer 4 is subjected to strain. Specifically, in the example illustrated in Figure 1, the object 100 is subjected to a tensile strain as indicated by the arrows S in Figure 1. It is noted that the sensor 1 may be used for detecting and/or measuring very small strains, such as strains of approximately 0.05%. Of course, the sensor 1 may be used for detecting and/or measuring other types of tensile strains than the strain S illustrated in Figure 1, as well as compressive strains, strains resulting from bending the object 100, etc.

At least a part of the strain S applied to the object 100 is transferred to the layer 4, here via the attachment means 2 and the substrate 3. The amount of strain that is transferred to the layer 4 for a given strain applied to the object 100 depends for example on how the substrate 3 react to strain. The Poisson ratio of the substrate 3 is an example of a factor that affects how the substrate 3 reacts to strain. In this example, it is assumed that basically all of the strain S is transferred to the layer 4.

At a step S3, light is applied to the layer 4. Specifically, in this case, the light source 6 shines light onto the surface 4a of the layer 4. The light from the light source 6 here excites the layer 4, which then relaxes and emits light. The range of wavelengths that the light source 6 is configured to emit depends on various factors, such as the material of the layer 4.

At a step S4, the optical spectrum 15 of the strained layer 4 is detected. Specifically, in this case, the detector 7 detects the optical spectrum 15 of the strained layer 4 by detecting the light emitted by the layer 4 during relaxation. As can be seen in Figure 6, the detected optical spectrum 15 here includes a bright exciton peak 15a and a dark exciton peak 15b. It is noted that, although the optical spectrum in this case is a photoluminescence spectrum, the optical spectrum 15 may in a different example be detected in some other way than by a photoluminescence measurement. For instance, the sensor 1 may be configured to detect the optical spectrum 15 by a reflectance measurement, a transmittance measurement and/or an absorption measurement.

At a step S5, at least one difference between the detected optical spectrum 15 and a reference optical spectrum 16 is determined by the processing circuitry 8. The at least one difference is chosen so as to be indicative of the strain to which the layer 4 is subjected, which in this case is the strain S.

As can be seen in Figure 6, the reference optical spectrum 16 here includes a bright exciton peak 16a and a dark peak 16b. The dark peak 16b may be referred to as a reference peak, and the bright peak 16a may be referred to as a further reference peak. The reference optical spectrum 16 has in this case been obtained by a photoluminescence measurement of the layer 4, with the molecules 5 attached thereto, in an unstrained state, i.e. without strain being applied to the layer 4. The reference optical spectrum 16 may for example be detected before the sensor 1 is attached to the object 100. Alternatively, the reference optical spectrum 16 may be detected after the sensor 1 has been attached to the object 100, but before the object 100 is subjected to strain. The detection of the reference optical spectrum 16 may form part of a calibration procedure of the sensor 1. It is noted that the optical spectra 15, 16 are typically obtained by the same type of measurement in order to, for example, facilitate comparison therebetween.

The bright exciton peak 16a of the reference optical spectrum 16 and the bright exciton peak 15a of the detected optical spectrum 15 are in this case virtually indistinguishable, the reason being that the strain S is too small to have a clearly noticeable effect on the bright excitonic states. In Figure 6, the solid and dashed lines representing the bright peaks 15a, 16a are slightly separated for clarity reasons. The dark exciton peaks 15b, 16b, on the other hand, are clearly distinguishable, something which reflects that the dark excitonic states are significantly more sensitive to strain than the bright excitonic states. In the example illustrated in Figure 6, as a result of the applied strain S, the dark exciton peak 15b of the detected optical spectrum 15 is blue-shifted and has a smaller intensity than the dark exciton peak 16b of the reference optical spectrum 16.

As an example, if the layer 5 is a monolayer of tungsten disulfide with merocyanine molecules, and the strain S is a biaxial tensile strain of 0.05%, the dark exciton peak 15b and the dark exciton peak 16b are centered on approximately 1.96 eV and approximately 1.95 eV, respectively, and that the bright exciton peaks 15a, 16a are centered on approximately 2 eV. Further, it can be shown that the intensities of the dark exciton peak 15b and the dark exciton peak 16b are then approximately 0.15 a.u. (atomic units) and approximately 0.5 a.u., respectively, and that the bright peaks 15a, 16a have an intensity of approximately 1 a.u.

In order to determine one or more differences between the detected optical spectrum 15 and the reference optical spectrum 16, the processing circuitry 8 here receives data regarding the detected optical spectrum 15 and the reference optical spectrum 16 from the detector 7. Of course, the data regarding the reference optical spectrum 16 may be provided to the processing circuitry 8 in some other way in a different example. For instance, the data regarding the reference optical spectrum 16 may be stored in the processing circuitry 8, or the sensor 1 may comprise a separate storage unit in which that data is stored and from which the processing circuitry 8 can retrieve that data.

The processing circuitry 8 compares the detected optical spectrum 15 with the reference optical spectrum 16 to determine at least one difference between the two spectra 15, 16. In this case, the processing circuitry 8 determines two differences. Specifically, the processing circuitry 8 here determines the differences in position and intensity, here the height, between the dark exciton peaks 15b, 16b in Figure 6. The positions of the peaks 15b, 16b are an example of what may be referred to as corresponding characteristics of the peaks 15b, 16b, and the heights of the peaks 15b, 16b are another example of what may be referred to as corresponding characteristics of the peaks 15b, 16b.

It is noted that the positions and the intensities of the dark exciton peaks 15b, 16b are but two examples of characteristics that may be used for determining differences between the detected optical spectrum 15 and the reference optical spectrum 16. Accordingly, in a different example, the processing circuitry 8 may be configured to use some other characteristics than the intensities and positions of the dark exciton peaks 15b, 16b. For example, the processing circuitry 8 may be configured to compare the widths of the dark exciton peaks 15b, 16b. Alternatively, or in addition, the processing circuitry 8 may be configured to compare the distance between the detected optical spectrum's 15 peaks 15a, 15b with the distance between the reference optical spectrum's 16 peaks 16a, 16b. The distance between two peaks is an example of what may be referred to as a relationship between those peaks, more precisely a relationship between the positions of those peaks.

Further, the processing circuitry 8 may be configured to use characteristics of the dark exciton peaks 15b, 16b only, and/or to use characteristics of the dark exciton peaks 15b, 16b as well as characteristics of the bright exciton peaks 15a, 16a, when determining differences between the detected optical spectrum 15 and the reference spectrum 16. Also, the processing circuitry 8 may in a different example be configured to determine only one difference, or more than two differences, between the detected optical spectrum 15 and the reference optical spectrum 16.

At an optional step S6, the strain S to which the object 6 is subjected is determined, here by the processing circuitry 8. In this case, the processing circuitry 8 determines the strain S based on the differences in position and intensity between the dark exciton peaks 15b, 16b. These differences are in this case related to the strain S to which the layer 4 is subjected and can, thus, be used to derive the strain S. The processing circuitry 8 may for example be configured to derive the strain using the determined differences together with predetermined values representing the effect of strain on the layer 4. Such predetermined values may for example have been obtained during a calibration procedure of the sensor 1. The sensor 1 may be configured to send the determined value of the strain S to an external unit, such as a laptop or desktop computer, either via a wired connection or a wireless connection. It is noted that, in a different example, the sensor 1 may be configured to send data on the difference(s) between the optical spectra 15, 16 to an external unit, such as a laptop or desktop computer. The external unit may then determine, instead of the sensor 1, the value of the strain S based on the data received from the sensor 1.

It is noted that the sensor 1 may in a different example be configured to determine simply whether or not the detected optical spectrum 15 includes a dark exciton peak 15b. Such a sensor may be useful as a contact sensor, for instance.

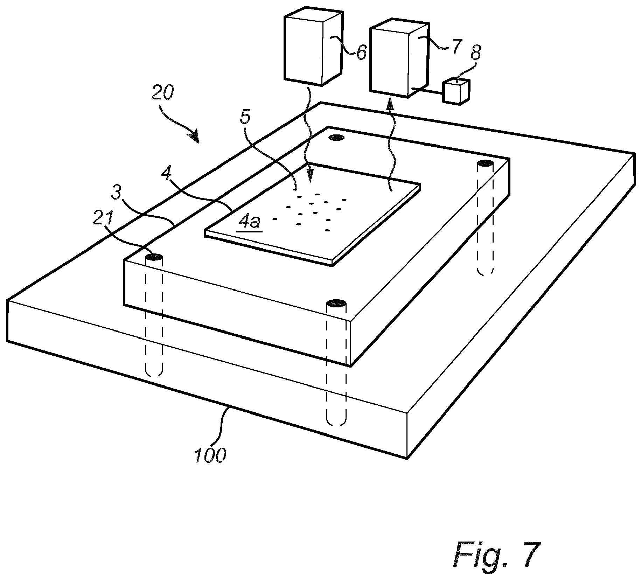

Figure 7 shows an example of a sensor 20 which is similar to the sensor 1 discussed above with reference to Figures 1 to 6. However, the sensor 20 in Figure 7 is not attached to the object 100 via a chemical attachment means. Instead, the sensor 20 is attached to the object 100 via an attachment means 21 in the form of mechanical attachment means. The mechanical attachement means 21 here comprise four pins extending through the substrate 3 and into the object 100. Examples of other types of suitable mechanical attachment means 21 include screws, bolts, clamps and nails.

The modifications and variations mentioned in the discussion above regarding the sensor 1, discussed with reference to Figures 1 to 6, are applicable also to the sensor 20 in Figure 7. In particular, it is noted that the dark excitons do not have to be activated by exciton-molecule scattering, but can be activated as the result of disorder and/or scattering with phonons, which can provide a large center-of-mass momentum. Thus, in a different example, the sensor 20 may be configured such that the dark excitons are activated in a different manner than by exciton-molecule scattering. For example, the layer 4 may have been subjected to a pre-treatment for increasing the efficiency of exciton-phonon scattering and/or a pre-treatment for increasing the efficiency of exciton-disorder scattering.

The person skilled in the art realizes that the present invention by no means is limited to the embodiments described above. On the contrary, many modifications and variations are possible within the scope of the appended claims. For example, the layer 4 may be supported only at certain points, and free standing between these points. Further, other materials than the ones mentioned above may be found suitable for the sensor.

In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A strain sensor (1; 20) comprising:
a two-dimensional layer of material (4) having an electronic band structure comprising
a valence band,
a first conduction band separated from the valence band by a first energy gap, such that the layer of material (4) exhibits optically accessible excitonic states, and
a second conduction band separated from the valence band by a second energy gap and a momentum gap, such that the layer of material (4) exhibits optically inaccessible excitonic states;
a light source (6) arranged to apply light to the layer of material (4);
a detector (7) configured to detect an optical spectrum (15) of the layer of material (4) resulting from light applied by the light source (6) to the layer of material (4); and
processing circuitry (8) configured to determine a difference between a characteristic of the detected optical spectrum (15) and a corresponding characteristic of a reference optical spectrum (16),
wherein the layer of material (4) has been subjected to a pre-treatment to provide a momentum allowing said optically inaccessible states to be accessed,
wherein said difference is indicative of a strain to which the layer of material (4) is subjected,
wherein the reference spectrum (16) comprises a reference peak (16b) ascribable to said optically inaccessible excitonic states, and
wherein the corresponding characteristic is a characteristic of the reference peak (16b).

2. The strain sensor (1; 20) according to claim 1, wherein the corresponding characteristic is based on one of: an amplitude of the reference peak (16b); a width of the reference peak (16b); and a position of the reference peak (16b).

3. The strain sensor (1; 20) according to claim 1 or 2, wherein the reference optical spectrum (16) includes a further reference peak (16a) ascribable to said optically accessible excitonic states, and wherein the corresponding characteristic is based on a relationship between the reference peak (16b) and the further reference peak (16a).

4. The strain sensor (1; 20) according to claim 3, wherein the corresponding characteristic is based on one of:
a relationship between an amplitude of the reference peak (16b) and an amplitude of the further reference peak (16a);
a relationship between a width of the reference peak (16b) and a width of the further reference peak (16a); and
a relationship between a position of the reference peak (16b) and a position of the further reference peak (16a).

5. The strain sensor (1; 20) according to any one of the preceding claims, wherein the processing circuitry (8) is configured to determine a value of the strain to which the layer of material (4) is subjected, the value being based on the determined difference.

6. The strain sensor (1; 20) according to any one of the preceding claims, wherein the processing circuitry (8) is configured to relate the determined difference to a predetermined value representing an effect of strain on the layer of material (4).

7. The strain sensor (1; 20) according to claim 6, wherein the predetermined value is obtained from a calibration of the strain sensor (1; 20).

8. The strain sensor (1; 20) according to any of the preceding claims, wherein the processing circuitry (8) is configured to determine at least one further difference, the further difference being a difference between a further characteristic of the detected optical spectrum (15) and a further corresponding characteristic of the reference optical spectrum (16).

9. The strain sensor (1; 20) according to any one of the preceding claims, wherein the pre-treatment comprises applying dipole moments to the layer of material (4) so that said momentum is at least partly provided by the dipole moments.

10. The strain sensor (1; 20) according to any of the preceding claims, wherein the pre-treatment comprises arranging molecules (5) with a dipole moment on the layer of material (4) so that said momentum is at least partly provided by the molecules (5) with a dipole moment.

11. The strain sensor (1; 20) according to any of the preceding claims, wherein the pre-treatment comprises adapting the layer of material (4) to increase exciton-disorder scattering.

12. The strain sensor (1; 20) according to any of the preceding claims, wherein the pre-treatment comprises adapting the layer of material (4) to increase exciton-phonon scattering.

13. The strain sensor (1; 20) according to claim to any of the preceding claims, wherein the layer of material (4) comprises a transition metal dichalcogenide.

14. The strain sensor (1; 20) according to any one of the preceding claims, further comprising a substrate (3), the layer of material (4) being attached to the substrate such that a strain applied to the substrate (3) is at least partly transmitted to the layer of material (4).

15. A method for detecting strain, the method comprising:
providing (S1) a two-dimensional layer of material (4) having an electronic band structure comprising
a valence band,
a first conduction band separated from the valence band by a first energy gap, such that the layer of material (4) exhibits optically accessible excitonic states, and
a second conduction band separated from the valence band by a second energy gap and a momentum gap, such that the layer of material (4) exhibits optically inaccessible excitonic states;
subjecting (S2) the layer of material (4) to strain;
applying (S3) light to the layer of material (4);
detecting (S4) an optical spectrum (15) of the layer of material (4) resulting from the light applied to the layer of material (4); and
determining (S5) a difference between a characteristic of the detected optical spectrum (15) and a corresponding characteristic of a reference optical spectrum (16),
wherein the layer of material (4) has been pre-treated to provide a momentum allowing said optically inaccessible states to be accessed,
wherein said difference is indicative of a strain applied to the layer of material (4),
wherein the reference spectrum (16) comprises a reference peak (16b) ascribable to said optically inaccessible excitonic states, and
wherein the corresponding characteristic is a characteristic of the reference peak (16b).
